# EUROPÄISCHE PATENTSCHRIFT

(11) **EP 1 185 960 B1**
(45) Veröffentlichungstag und Bekanntmachung des Hinweises auf die Patenterteilung: **16.04.2008**
(21) Anmeldenummer: 00943739.3
(22) Anmeldetag: 25.05.2000
(51) Int. Cl.: G07F 1/00

(54) **VERFAHREN UND VORRICHTUNG ZUM ABSPEICHERN UND WIEDERAUFFINDEN VON PIN-CODES**
METHOD AND DEVICE FOR SAVING AND RETRIEVING PIN CODES
PROCEDE ET DISPOSITIF SERVANT A SAUVEGARDER ET A RETROUVER DES CODES PIN

(30) Priorität: 27.05.1999 DE 19924232
(43) Veröffentlichungstag der Anmeldung: 13.03.2002
(73) Patentinhaber: Giesecke & Devrient GmbH, 81677 München (DE)
(72) Erfinder: KOLBECK, Alexander, D-82362 Weilheim (DE)
(74) Vertreter: Höhfeld, Jochen
(86) Internationale Anmeldenummer: PCT/EP2000/004781
(87) Internationale Veröffentlichungsnummer: WO 2000/074003

(56) Entgegenhaltungen:
- EP-A- 0 637 004
- EP-A- 0 742 532
- WO-A-99/56520
- DE-A- 19 511 031
- DE-U- 29 904 747
- US-A- 5 606 614

## Beschreibung

Die Erfindung betrifft ein Verfahren und eine Vorrichtung zum Abspeichern und Wiederauffinden einer Anzahl von persönlichen Identifikationsnummern (PINs) für zugangsgesicherte Einrichtungen, insbesondere für Chip- und Magnetstreifenkarten.

Heutzutage sind viele Einrichtungen durch persönliche Identifikationsnummern zugangsgesichert. PINs werden insbesondere für Chipkarten, Geldkarten, Ausweiskarten aber auch für zugangsgeschützte Software und dergleichen vergeben. Erst nach Angabe des jeweiligen PIN-Codes ist der Zugang möglich. Die PINs muß sich der PIN-Inhaber merken, damit nur er davon Kenntnis haben kann. Die ständig steigende Anzahl der sich zu merkenden PINs stellt ein Problem dar, da die menschliche Merkfähigkeit begrenzt ist und die PINs zumeist nicht frei wählbar und daher nur schwierig zu merken sind.

Aus der EP-A-0 742 532 sind ein Verfahren und eine Vorrichtung zum einfachen und sicheren Abspeichern und Wiederauffinden von PIN-Codes bekannt. Dort wird vorgeschlagen, den geheimen PIN-Code in einen nicht von außen auslesbaren Primärspeicher einzuspeichern und einen für den PIN-Code-Inhaber leichter merkbaren persönlichen Code, der frei wählbar ist, in einen Sekundärspeicher einzuspeichern. Wenn der PIN-Code-Inhaber den geheimen PIN-Code vergessen hat, gibt er den persönlichen Code in die Vorrichtung ein, und wenn ein in einem Mikroprozessor durchgeführter Vergleich mit dem im Sekundärspeicher abgespeicherten persönlichen Code übereinstimmt, dann wird auf einem Display für eine vorgegebene Zeitspanne der im Primärspeicher abgespeicherte geheime PIN-Code angezeigt.

Es können auch mehrere geheime PIN-Codes in dem Primärspeicher abgespeichert werden, die mittels demselben persönlichen Code nacheinander auf dem Display angezeigt werden. In der EP-A-0 637 004 ist am Ende der Beschreibungseinleitung ebenfalls ein solches Verfahren offenbart. Aus der nicht vorveröffentlichten WO 99/56520 A2 ist es zudem bekannt, die geheimen PIN-Codes bestimmten Karten zuzuordnen.

Die im Stand der Technik vorgeschlagenen Lösungen haben den Nachteil, daß sich der Inhaber mehrerer geheimer PIN-Codes neben dem leichter merkfähigen persönlichen Code zumindest noch merken muß, welcher Chip- oder Magnetkarte die gespeicherten und wiederaufgefundenen geheimen PIN-Codes jeweils zuzuordnen sind. Bei der ständig zunehmenden Anzahl von durch PINs zugangsgesicherten Einrichtungen kann diese vorgeschlagene Lösung nicht befriedigen.

Aufgabe der vorliegenden Erfindung ist es daher, ein Verfahren und eine Vorrichtung zum Abspeichern und Wiederauffinden einer Anzahl von PIN-Codes vorzuschlagen, bei denen mittels einem einzigen, frei wählbaren persönlichen Code genau derjenige geheime PIN-Code wiederaufgefunden werden kann, der der jeweiligen zugangsgesicherten Einrichtung zugehörig ist.

Die Erfindung wird durch die Merkmale der nebengeordneten Ansprüche gelöst.

Im Gegensatz zu den bekannten Systemen zum Abspeichern und Wiederauffinden einer Anzahl von PIN-Codes wird erfindungsgemäß zusätzlich zu jedem abgespeicherten PIN-Code ein eindeutiges Merkmal der jeweils zugehörigen zugangsgesicherten Einrichtung, beispielsweise die Seriennummer einer Chipkarte oder eine automatisch gemessene Eigenschaft des in der Chipkarte enthaltenen Chips, abgespeichert. Dabei wird zwischen jedem abgespeicherten PIN-Code und dem zugehörigen abgespeicherten eindeutigen Merkmal der jeweiligen Einrichtung bzw. Chipkarte eine eindeutige feste Verknüpfung erzeugt. Beim Wiederauffinden eines individuellen PIN-Codes für eine zugangsgesicherte Einrichtung werden dann zwei Angaben gemacht, nämlich einerseits wird ein zuvor frei gewählter Zugriffscode angegeben, der für jeden Wiederauffindungsvorgang derselbe und daher leicht merkbar ist. Andererseits wird das eindeutige Merkmal der zugangsgesicherten Einrichtung bzw. Chipkarte angegeben, deren individueller PIN wiederaufgefunden werden soll. Der Zugriffscode, der nur dem Inhaber der individuellen PIN bekannt ist, stellt sicher, daß die individuellen PINs nicht von Dritten ausgespäht werden können. Die Angabe des eindeutigen Merkmals wird benötigt, um über die eindeutige feste Verknüpfung den zugehörigen individuellen PIN wiederaufzufinden. Der individuelle wiederaufgefundene PIN kann sodann angezeigt werden.

Das erfindungsgemäße Verfahren und die Vorrichtung bieten somit durch die jeweilige Verknüpfung der geheimen PIN-Codes mit dem eindeutigen Merkmal der zugehörigen zugangsgesicherten Einrichtung den Vorteil, daß mittels eines einzigen, frei wählbaren Zugriffscodes die sichere Verwahrung und zielgenaue Wiederauffindung verschiedener PIN-Codes möglich ist.

Beim Wiederauffinden des PIN-Codes ist es irrelevant, ob zunächst der frei gewählte Zugriffscode oder das eindeutige Merkmal angegeben wird. Der individuelle PIN wird in jedem Falle erst dann ausgegeben, wenn sowohl der angegebene Zugriffscode zulässig war als auch das angegebene eindeutige Merkmal mit einem der abgespeicherten eindeutigen Merkmale übereinstimmt.

Vorteilhafterweise werden der Zugriffscode und/oder die eindeutigen Merkmale und/ oder die PIN-Codes in verschlüsselter Form abgespeichert.

Dies erschwert es einem Dritten, der sich Zugang zu den Speicherbereichen verschafft hat, die relevanten Inhalte der Speicher zu erfassen.

In einer besonderen Ausführungsform des Verfahrens ist vorgesehen, daß der Zugriffscode als Schlüssel zur Verschlüsselung der eindeutigen Merkmale und/oder PIN-Codes dient und nur solange gespeichert bleibt, wie er zur Verschlüsselung dieser Daten benötigt wird. Beim Wiederauffinden eines individuellen PINs wird das eindeutige Merkmal derjenigen Einrichtung, dessen individueller PIN wiederaufgefunden werden soll, angegeben und mittels dem ebenfalls anzugebenden Zugriffscode verschlüsselt, wobei anschließend ein Vergleich mit den zuvor abgespeicherten und identisch verschlüsselten eindeutigen Merkmalen erfolgt. Durch den Vergleich des verschlüsselten angegebenen Merkmals mit dem verschlüsselt abgespeicherten Merkmal werden somit zwei Prüfungen gleichzeitig durchgeführt, nämlich einerseits, ob der Zugriffscode zulässig ist und andererseits, ob das angegebene eindeutige Merkmal mit einem der abgespeicherten eindeutigen Merkmale übereinstimmt. Denn wenn der Zugriffscode nicht zulässig ist oder ein entsprechendes eindeutiges Merkmal nicht abgespeichert ist, fällt der Vergleich negativ aus.

Im Falle, daß der Vergleich negativ ausfällt, wird ein falscher, nicht abgespeicherter PIN-Code ausgegeben. Fällt der Vergleich positiv aus, so wird der verschlüsselt abgespeicherte individuelle PIN-Code mit dem angegebenen Zugriffscode wieder entschlüsselt und ausgegeben. Anschließend wird der Zugriffscode wieder gelöscht.

Um die Sicherheit der abgespeicherten Daten vor unerlaubtem Zugriff zu erhöhen, können die PIN-Codes auch - und gegebenenfalls zusätzlich zu der zuvor beschriebenen Verschlüsselung - verschlüsselt werden, indem das jeweils eindeutige Merkmal der dem PIN-Code zugehörigen zugangsgesicherten Einrichtung den Schlüssel bildet.

Die PIN-Codes werden dann am sichersten verwahrt, wenn der frei gewählte Zugriffscode nur kurzzeitig abgespeichert wird, also nach dem Löschen nicht mehr vorliegt, die abgespeicherten eindeutigen Merkmale mit dem Zugriffscode verschlüsselt vorliegen und die jeweils zugehörigen PIN-Codes einerseits mit dem Zugriffscode und andererseits mit dem zugehörigen verschlüsselten eindeutigen Merkmal verschlüsselt vorliegen. Die Entschlüsselung und nachfolgende Ausgabe der PIN-Codes erfolgt dann in umgekehrter Reihenfolge allein durch Angabe des Zugriffscodes und des jeweiligen eindeutigen Merkmals der zugriffsgesicherten Einrichtung, deren individueller PIN-Code wiederaufgefunden werden soll.

Als zugangsgesicherte Einrichtungen kommen insbesondere Chipkarten und Magnetstreifenkarten in Betracht. Als eindeutiges Merkmal einer Magnetstreifenkarte kommt beispielsweise deren Seriennummer in Betracht, die zusätzlich zum Zugriffscode manuell angegeben werden muß. Insbesondere bei Chipkarten kommt neben der Seriennummer als eindeutiges Merkmal auch eine für den jeweiligen Chip charakteristische physikalische Eigenschaft in Betracht. Eine solche physikalische Eigenschaft kann beispielsweise die für einen jeden Chip charakteristische Datenverarbeitungsgeschwindigkeit sein, die anhand eines definierten Algorithmus ermittelt wird. Die Zeitspanne, die der Chip benötigt, um den vorgegebenen Algorithmus auszuführen, dient dann als eindeutiges Merkmal für die Chipkarte.

Das erfindungsgemäße Verfahren kann vorteilhafter Weise mit einem modifizierten Taschenkartenleser durchgeführt werden. Taschenkartenleser werden dazu verwendet, die frei zugänglichen, fest in eine Chipkarte eingespeicherten oder veränderbaren Daten auszulesen. Insbesondere im Zusammenhang mit Geldkarten werden sie eingesetzt, um zu verifizieren, welcher Geldbetrag auf der Geldkarte noch gespeichert ist. Solche herkömmlichen Taschenkartenleser werden lediglich mit einer Tastatur zur Eingabe des frei gewählten Zugriffscodes und der abzuspeichernden PIN-Codes sowie gegebenenfalls der Seriennummern oder anderer eindeutiger Merkmale der zugehörigen Karten ausgerüstet, sowie mit einer Software zur Durchführung des zuvor beschriebenen Verfahrens zum Ausgeben und Wiederauffinden der PIN-Codes. Falls das eindeutige Merkmal eine charakteristische physikalische Eigenschaft der Karte ist, die automatisch erfaßt wird, ist der Taschenkartenleser mit einer entsprechenden Einrichtung ausgestattet. Das heißt beispielsweise, daß der Taschenkartenleser ein Programm und eine Einrichtung enthält, mit denen ein Algorithmus auf der Chipkarte ausgeführt und die Zeitdauer für die Ausführung des Algorithmus gemessen wird.

Die Verwendung eines Taschenkartenlesers hat den Vorteil, daß er sehr flach ist und etwa die Größe einer Chipkarte hat, so daß er jederzeit mitgeführt werden kann.

Nachfolgend wird die Erfindung beispielhaft anhand der beiden Figuren erläutert. Darin zeigen:
Figur 1 eine Chipkarte 10 und einen Taschenkartenleser 20, in den die Chipkarte 10 eingeführt werden kann, und
Figur 2 die Verknüpfung zwischen Speicherbereichen Ml bis Mn, die Daten zu eindeutigen Merkmalen enthalten, jeweils mit einem zugeordneten Speicherbereich PIN1 bis PINn, in denen die geheimen PIN-Codes abgespeichert sind.

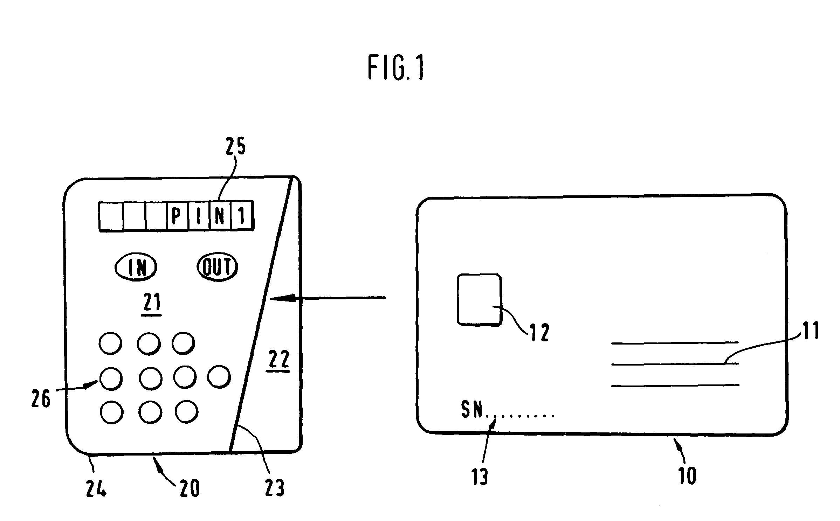

Figur 1 zeigt eine Chipkarte 10 mit einem Chipmodul 12, einem Schriftfeld 11 und einer Seriennummer 13. Die Chipkarte kann eine Geldkarte oder eine Kreditkarte oder dergleichen sein, und vor jedem Zugriff auf einen geheimen Speicherbereich des Chips in dem Chipmodul 12 der Chipkarte 10 ist die Angabe eines geheimen PIN-Codes erforderlich. Die Karte kann in den Taschenkartenleser 20, der ein wenig breiter als die Chipkarte 10 ist, eingeschoben werden. Dazu weist der Taschenkartenleser 20 zwei plattenartige Deckelemente 21 und 22 auf, die an ihren Kanten 24 miteinander verbunden sind und zwischen sich einen Spalt 23 bilden, in den die Chipkarte 10 eingeführt wird, wie mit dem Pfeil in Figur 1 dargestellt. Handelt es sich um eine Geldkarte, so zeigen herkömmliche Taschenkartenleser den auf der Geldkarte gespeicherten Geldbetrag an, ohne daß es der Eingabe eines PIN-Codes bedarf. Wenn der Benutzer der Geldkarte an einem Bankautomaten den auf der Karte gespeicherten Geldbetrag aufstocken möchte, muß er in den Bankautomaten zunächst seine persönliche PIN eingeben, um die Transaktion starten zu können. Dieser PIN-Code kann der Karteninhaber mit vielen weiteren PIN-Codes in dem Taschenkartenleser derart speichern, daß er sie jederzeit wiederauffinden kann, beispielsweise wenn er eine Transaktion zum Auffüllen der Geldkarte vornehmen möchte.

Das Verfahren zum Einspeichern und Wiederauffinden einer Anzahl von PIN-Codes wird nun beispielhaft an dem Taschenkartenleser 20 beschrieben.

Zunächst wird durch Drücken der Taste IN dem Taschenkartenleser 20 angezeigt, daß ein frei wählbarer Zugriffscode eingegeben werden soll. Der frei wählbare Zugriffscode wird sinvollerweise bei der Inbetriebnahme des Taschenkartenlesers 20 eingegeben. Es kann auch vorgesehen sein, daß mehrere Benutzer mit jeweils mehreren Chipkarten einen Taschekartenleser verwenden. Dann werden mehrere Zugriffscodes verwendet, d. h. mindestens ein Zugriffscode pro Benutzer.

Daraufhin wird mit Hilfe der numerischen oder alphanumerischen Tastatur 26 die frei wählbare PIN eingegeben und anschließend durch erneutes Drükken der Taste IN bestätigt. Die frei wählbare PIN wird zumindest für einen kurzen Zeitraum abgespeichert und fortan als Zugriffscode für den Taschenkartenleser verwendet.

Als nächstes wird ein eindeutiges Merkmal der Chipkarte 10 in den Taschenkartenleser eingegeben und durch Drücken der Taste IN bestätigt. Als eindeutiges Merkmal kann beispielsweise die Seriennummer 13 der Chipkarte 10 verwendet werden. Nach Eingabe des eindeutigen Merkmals wird die der Chipkarte 10 gespeicherte geheime PIN in den Taschenkartenleser eingegeben und ebenfalls durch Drücken der Taste IN bestätigt. Es kann auch zunächst die geheime PIN und anschließend das eindeutige Merkmal der Chipkarte 10 eingegeben werden. In jedem Falle führt das Display 25 den Benutzer durch das Programm, indem es anzeigt, welche Information als nächstes einzugeben ist. In Figur 1 ist im Display 25 dargestellt, daß als nächstes der geheime PIN-Code einzugeben ist, der einen ersten Speicherbereich PIN1 belegt, wie nachfolgend erläutert.

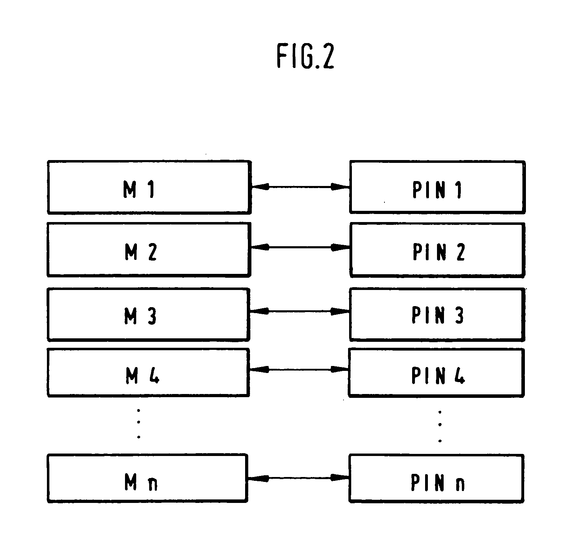

In Figur 2 sind Speicherbereiche M1 bis Mn und PIN1 bis PINn angegeben. Das eingegebene eindeutige Merkmal der Chipkarte 10, im Beispielsfall die Seriennummer 13 der Chipkarte 10, wird im Speicherbereich M1 abgespeichert und die zugehörige PIN wird im Speicherbereich PIN 1 abgespeichert. Beide Speicherbereiche sind fest miteinander verknüpft, wie durch den Doppelpfeil angedeutet wird. Damit ist der Abspeichervorgang abgeschlossen. Auf die beschriebene Weise können weitere eindeutige Merkmale M2 bis Mn mit fest zugeordneten persönlichen Identifikationsnummern PIN2 bis PINn abgespeichert werden. Die Speicherbereiche M1 bis Mn und PIN1 bis PINn sind von außen nicht zugänglich bzw. nicht auslesbar. Dies gilt auch für den Speicherbereich in dem der Zugriffscode gespeichert ist.

Das Wiederauffinden eines speziellen abgespeicherten PINs erfolgt in analoger Weise. Durch Drücken der Taste OUT wird dem Taschenkartenleser 20 angezeigt, daß ein individueller PIN ausgelesen werden soll. Der Taschenkartenleser 20 fordert den Benutzer dann auf, einerseits den Zugriffscode anzugeben und andererseits das eindeutige Merkmal der Chipkarte anzugeben, deren individueller PIN-Code wiederaufgefunden werden soll. Im oben beschriebenen Beispielsfall wird als eindeutiges Merkmal die Seriennummer 13 der Chipkarte 10 angegeben. Nachdem der Taschenkartenleser 20 die Zulässigkeit des Zugriffcodes geprüft und bestätigt hat und nachdem im Taschenkartenleser 20 ein Vergleich des angegebenen Merkmals mit den in den Speicherbereichen M1 bis Mn abgespeicherten eindeutigen Merkmalen ein positives Ergebnis geliefert hat, wird auf dem Display 25 der zu dem aufgefundenen eindeutigen Merkmal zugehörige individuelle PIN-Code angezeigt, im Beispielsfalle also der im Speicherbereich PIN 1 abgespeicherte PIN-Code. Das Display erlischt nach einigen Sekunden, beispielsweise etwa nach 3 Sekunden, oder nachdem die Karte dem Taschenkartenleser wieder entzogen wurde.

Falls entweder der angegebene Zugriffscode unzulässig war oder zu dem angegebenen eindeutigen Merkmal kein abgespeichertes eindeutiges Merkmal auffindbar ist, wird in dem Display 25 ein PIN-Code angezeigt, der mit keinem der in den Speicherbereichen PIN1 bis PINn abgespeicherten PIN-Codes übereinstimmt, wahlweise wird eine Fehlermeldung angezeigt.

In der zuvor beschriebenen Ausführungsform ist ein eindeutiges Merkmal einer Chipkarte mit der dieser Chipkarte zugehörigen PIN verknüpft, indem die jeweiligen Speicherbereiche M1 und PIN1, M2 und PIN2, ... Mn und PINn einander fest zugeordnet sind. In einer alternativen Ausführungsform erfolgt die Verknüpfung der Daten, indem jede abgespeicherte geheime PIN mit dem zugehörigen eindeutigen Merkmal verschlüsselt wird. Beim Versuch des Wiederauffindens der verschlüsselt abgespeicherten PIN wird die verschlüsselt abgespeicherte PIN mittels demselben eindeutigen Merkmal entschlüsselt. Die verknüpften Speicherbereiche sind somit nicht fest verdrahtet sondern logisch miteinander verknüpft.

Nach einer weiteren Ausgestaltung der Erfindung ist vorgesehen, daß der frei gewählte Zugriffscode nur temporär gespeichert wird. Der Zugriffscode muß nur solange gespeichert bleiben, wie er beim Abspeichern von individuellen PINs zur Verschlüsselung des zugehörigen eindeutigen Merkmals und gegebenenfalls des individuellen PINs benötigt wird. Nach dem Eingeben eines eindeutigen Merkmals und des zugehörigen PINs, dem Verschlüsseln des eindeutigen Merkmals und gegebenenfalls des individuellen PINs mit dem Zugriffscode sowie dem Abspeichern des verschlüsselten eindeutigen Merkmals und gegebenenfalls verschlüsselten individuellen PINs liegen das eindeutige Merkmal und der individuelle PIN in den jeweiligen Speicherbereichen verschlüsselt vor, während der als Schlüssel verwendete Zugriffscode wieder gelöscht wird. Dadurch wird sichergestellt, daß jemand, der sich ohne Kenntnis des Zugriffscodes Zugang zu den einzelnen Speicherbereichen verschaffen konnte, die Inhalte der Speicherbereiche nicht interpretieren kann.

Zu Beginn des Wiederauffindens einer individuellen PIN wird der Zugriffscode und das eindeutige Merkmal der Chipkarte, deren individueller PIN wiederaufgefunden werden soll, über die Tastatur 26 eingegeben. Sodann wird das eingegebene eindeutige Merkmal mit dem Zugriffscode verschlüsselt und anschließend wird geprüft, ob es zu dem derart verschlüsselten eindeutigen Merkmal ein Pendant in den Speicherbereichen M1 bis Mn gibt, in denen die eindeutigen Merkmale verschiedener Chipkarten zuvor verschlüsselt abgespeichert wurden. Ergibt diese Prüfung ein positives Ergebnis, so wird der damit verknüpfte PIN-Code, gegebenenfalls nach Entschlüsselung mittels des Zugriffscodes, auf dem Display 25 angezeigt.

Die Karte 10 muß keine Chipkarte sein, sondern kann beispielsweise auch eine Magnetstreifenkarte sein. Die Erfindung ist darauf in gleicher Weise anwendbar. Wenn es sich jedoch um eine Chipkarte handelt, bietet sich ein automatisiertes Verfahren zur Angabe des eindeutigen Merkmals an. Anstelle der Eingabe eines eindeutigen Merkmals wie der Seriennummer über die Tastatur 26, kann der Taschenkartenleser auch eine charakteristische Eigenschaft oder Seriennummer des in der Chipkarte 10 enthaltenen Chips 12 automatisch ermitteln und als eindeutiges Merkmal verwenden. Im Falle von Geldkarten beispielsweise erfolgt ohnehin ein Datentransfer zwischen dem Taschenkartenleser 20 und dem Chip 12 der Chipkarte 10, um den in der Chipkarte gespeicherten Geldbetrag anzeigen zu können. Es ist daher problemlos möglich, eine charakteristische physikalische Eigenschaft des Chips über die ohnehin realisierte Kontaktierung zwischen Chip 12 und Taschenkartenleser 20 zu ermitteln. Dazu veranlaßt der Taschenkartenleser 20 in dem Chip 12 die Durchführung eines Algorithmus und die Zeitdauer, die der Chip 12 benötigt, um den Algorithmus abzuarbeiten, wird erfaßt und als charakteristische physikalische Eigenschaft des Chips 12 und somit der Chipkarte 10 verwendet. Dieser Vorgang erfolgt automatisch nachdem die Chipkarte 10 in den Spalt 23 des Taschenkartenlesers 20 vollständig eingeschoben worden ist und der Benutzer des Taschenkartenlesers durch Drükken der Taste OUT anzeigt, daß er die dieser Chipkarte zugehörige individuelle PIN wiederauffinden möchte. Der Karteninhaber muß nur noch den zuvor frei gewählten Zugriffscode über die Tastatur 26 in den Taschenkartenleser 20 eingeben, um das zuvor beschriebene Vergleichsverfahren der charakteristischen physikalischen Eigenschaft zu starten und die Anzeige des der Karte 10 zugehörigen individuellen PINs auf dem Display 25 zu erhalten. Als charakteristische physikalische Eigenschaft kann jede Eigenschaft dienen, die zuverlässig erfaßbar und für jede Karte bzw. ihren Chip individuell ist.

Prinzipiell ist das oben für eine Chipkarte beschriebene automatische Verfahren zur Ermittlung des eindeutigen Merkmals auch bei einer Magnetstreifenkarte möglich, die auch über eindeutige Merkmale wie Seriennummern verfügt. Allerdings ist der Aufbau eines geeigneten Taschkartenlesers aufwendiger als in dem oben für eine Chipkarte beschriebenen Fall.

## Patentansprüche

1. Verfahren zum Abspeichern und Wiederauffinden einer Anzahl von PIN-Codes für zugangsgesicherte Einrichtungen, umfassend Schritte zum Abspeichern der PIN-Codes, nämlich
- Angeben und zumindest kurzzeitiges Abspeichern eines Zugriffscodes,
- Angeben und Abspeichern von mindestens einem PIN-Code einer zugangsgesicherten Einrichtung,
- Angeben und Abspeichern von mindestens einem eindeutigen Merkmal mindestens einer zugangsgesicherten Einrichtung,
- Herstellen einer Verknüpfung zwischen jeweils einem der abgespeicherten PIN-Codes und dem abgespeicherten eindeutigen Merkmal derjenigen Einrichtung, die mit dem betreffenden PIN-Code zugangsgesichert ist, und
Schritte zum Wiederauffinden eines bestimmten abgespeicherten PIN-Codes, nämlich
- Angeben des Zugriffscodes,
- Angeben des eindeutigen Merkmals der zu dem wiederaufzufindenden PIN-Code gehörigen zugangsgesicherten Einrichtung,
- Prüfen, ob der Zugriffscode zulässig ist,
- Prüfen, ob das angegebene eindeutige Merkmal mit einem der abgespeicherten eindeutigen Merkmale übereinstimmt, und
- wenn beide Prüfungen positiv ausfallen, Ausgeben des mit dem eindeutigen Merkmal verknüpften, abgespeicherten PIN-Codes,
und wobei der Zugriffscode und/oder die eindeutigen Merkmale und/oder die PIN-Codes in verschlüsselter Form abgespeichert werden.

2. Verfahren nach Anspruch 1, **dadurch gekennzeichnet, daß** der abgespeicherte Zugriffscode dauerhaft abgespeichert wird und die Prüfung der Zulässigkeit des angegebenen Zugriffscodes anhand eines Vergleichs mit dem dauerhaft abgespeicherten Zugriffscode erfolgt.

3. Verfahren nach Anspruch 1 oder 2, **dadurch gekennzeichnet, daß** der Zugriffscode als Schlüssel für das verschlüsselte Abspeichern verwendet wird.

4. Verfahren nach Anspruch 3, **dadurch gekennzeichnet, daß** der Zugriffscode nur kurzzeitig abgespeichert wird und gelöscht wird, nachdem die Verschlüsselung erfolgt ist.

5. Verfahren nach einem der Ansprüche 1 bis 4, **dadurch gekennzeichnet, daß** die Verknüpfung zwischen dem eindeutigen Merkmal einer zugangsgesicherten Einrichtung und dem zugehörigen PIN-Code durch eine Verschlüsselung des PIN-Codes erfolgt, wobei das eindeutige Merkmal den Schlüssel bildet.

6. Verfahren nach einem der Ansprüche 1 bis 5, **dadurch gekennzeichnet, daß** der Zugriffscode und/oder die eindeutigen Merkmale und/oder die PIN-Codes in von außen unzugänglichen Speicherbereichen abgespeichert werden.

7. Verfahren nach einem der Ansprüche 1 bis 6, **dadurch gekennzeichnet, daß** als eindeutiges Merkmal die jeweilige Seriennummer der zugangsgesicherten Einrichtung verwendet wird.

8. Verfahren nach einem der Ansprüche 1 bis 6, **dadurch gekennzeichnet, daß** als eindeutiges Merkmal eine charakteristische physikalische Eigenschaft der zugangsgesicherten Einrichtung verwendet wird.

9. Verfahren nach einem der Ansprüche 1 bis 8, **dadurch gekennzeichnet, daß** das jeweilige eindeutige Merkmal automatisch ermittelt und angegeben wird.

10. Verfahren nach einem der Ansprüche 1 bis 9, **dadurch gekennzeichnet, daß** die Ausgabe des PIN-Codes nur über einen begrenzten Zeitraum zur Verfügung gestellt wird.

11. Verfahren nach einem der Ansprüche 1 bis 10, **dadurch gekennzeichnet, daß** die zugangsgesicherten Einrichtungen Chipkarten und/oder Magnetstreifenkarten sind.

12. Verfahren nach einem der Ansprüche 1 bis 11, **dadurch gekennzeichnet, daß** ein falscher, nicht abgespeicherter PIN-Code ausgegeben wird, wenn eine der beiden Prüfungen negativ ausfällt.

13. Vorrichtung (20) zum Abspeichern und Wiederauffinden einer Anzahl von PIN-Codes für zugangsgesicherte Einrichtungen (10), umfassend
- eine Tastatur (26) zur Angabe der PIN-Codes und eines Zugriffscodes,
- eine Einrichtung zum Empfangen eines jeweils eindeutigen Merkmals der zugangsgesicherten Einrichtungen (10),
- mindestens einen Speicher zum zumindest kurzzeitigen Abspeichern des Zugriffscodes, zum Abspeichern der PIN-Codes und zum Abspeichern der eindeutigen Merkmale,
- eine Einrichtung zum Prüfen eines angegebenen Zugriffscodes auf seine Zulässigkeit und zum Vergleichen eines angegebenen eindeutigen Merkmals mit abgespeicherten eindeutigen Merkmalen und
- ein Display (25) zum Anzeigen wiederaufgefundener PIN-Codes, und wobei Einrichtung zum Verschlüsseln der PIN-Codes und/oder der eindeutigen Merkmale und/oder des Zugriffscodes vorgesehen ist.

14. Vorrichtung nach Anspruch 13, **dadurch gekennzeichnet, daß** die Vorrichtung (20) ein Taschenkartenleser ist.

15. Vorrichtung nach einem der Ansprüche 13, **dadurch gekennzeichnet, daß** von außen nicht zugängliche Speicherbereiche zum Abspeichern der PIN-Codes und/oder der eindeutigen Merkmale und/oder des Zugriffscodes vorgesehen sind.

16. Vorrichtung nach einem der Ansprüche 13 bis 15, **dadurch gekennzeichnet, daß** die Tastatur (26) die Einrichtung zum Empfangen der eindeutigen Merkmale bildet.

17. Vorrichtung nach einem der Ansprüche 13 bis 15, **dadurch gekennzeichnet, daß** die Einrichtung zum Empfangen der eindeutigen Merkmale eine Einrichtung zum automatischen Ermitteln der eindeutigen Merkmale der zugriffsgeschützten Einrichtungen umfaßt.

## Claims

1. A method for storing and retrieving a number of PIN codes for protected-access devices, comprising steps for storing the PIN codes, namely
- indicating and at least temporary storing an access code,
- indicating and storing at least one PIN code of a protected-access device,
- indicating and storing at least one unique feature of at least one protected-access device,
- producing a link between one of the stored PIN codes and the stored unique feature of that device with protected access through the relevant PIN code; and
steps for retrieving a certain stored PIN code, namely
- indicating the access code,
- indicating the unique feature of the protected-access device associated with the PIN code to be retrieved,
- testing whether the access code is permissible,
- testing whether the indicated unique feature matches one of the stored unique features, and
- if both tests turn out positive, outputting the stored PIN code linked with the unique feature,
- and whereby the access code and/or unique features and/or PIN codes are stored in encrypted form.

2. The method according to claim 1, **characterized in that** the stored access code is stored permanently and the permissibility of the indicated access code is tested with reference to a comparison with the permanently stored access code.

3. The method according to claim 1 or 2, **characterized in that** the access code is used as a key for encrypted storage.

4. The method according to claim 3, **characterized in that** the access code is stored only temporary and deleted after encrypting has taken place.

5. The method according to any of claims 1 to 4, **characterized in that** the linking between the unique feature of a protected-access device and the associated PIN code is effected by encrypting the PIN code, the unique feature forming the key.

6. The method according to any of claims 1 to 5, **characterized in that** the access code and/or unique features and/or PIN codes are stored in externally inaccessible memory areas.

7. The method according to any of claims 1 to 6, **characterized in that** the particular serial number of the protected-access device is used as unique feature.

8. The method according to any of claims 1 to 6, **characterized in that** a characteristic physical property of the protected-access device is used as unique feature.

9. The method according to any of claims 1 to 8, **characterized in that** the particular unique feature is automatically determined and indicated.

10. The method according to any of claims 1 to 9, **characterized in that** the output of the PIN code is made available only for a limited time period.

11. The method according to any of claims 1 to 10, **characterized in that** the protected-access devices are chip cards and/or magnetic stripe cards.

12. The method according to any of claims 1 to 11, **characterized in that** a wrong PIN code not stored is outputted if one of the two tests turns out negative.

13. An apparatus (20) for storing and retrieving a number of PIN codes for protected-access devices (10), comprising
- a keyboard (26) for indicating the PIN codes and an access code,
- a device for receiving unique features of the protected-access devices (10),
- at least one memory for at least temporary storing the access code, storing the PIN codes and storing the unique features,
- a device for testing an indicated access code as to its permissibility and comparing an indicated unique feature with stored unique features, and
- a display (25) for displaying retrieved PIN codes,
- and whereby device for encrypting the PIN codes and/or unique features and/or access code is provided.

14. The apparatus according to claim 13, **characterized in that** the apparatus (20) is a pocket card reader.

15. The apparatus according to either of claims 13, **characterized in that** externally inaccessible memory areas are provided for storing the PIN codes and/or unique features and/or access code.

16. The apparatus according to any of claims 13 to 15, **characterized in that** the keyboard (26) forms the device for receiving the unique features.

17. The apparatus according to any of claims 13 to 15, **characterized in that** the device for receiving the unique features includes a device for automatically determining the unique features of the access-protected devices.

## Revendications

1. Procédé servant à sauvegarder en mémoire et à retrouver une pluralité de codes secrets (PIN) pour des dispositifs à accès sécurisé, comprenant les étapes consistant à sauvegarder en mémoire les codes PIN, précisément :
- indiquer et au moins brièvement sauvegarder en mémoire un code d'accès,
- indiquer et sauvegarder en mémoire au moins un code PIN d'un dispositif à accès sécurisé,
- indiquer et sauvegarder en mémoire au moins une caractéristique univoque au moins d'un dispositif à accès sécurisé,
- établir une connexion entre chaque fois l'un des codes PIN sauvegardé en mémoire et la caractéristique univoque sauvegardée en mémoire, dont l'accès est sécurisé à l'aide du code PIN concerné, et
des étapes pour retrouver un code d'accès PIN sauvegardé en mémoire déterminé, précisément :
- indiquer le code d'accès,
- indiquer la caractéristique univoque du dispositif à accès sécurisé appartenant au code PIN à retrouver,
- vérifier si la caractéristique univoque indiquée coïncide avec l'une des caractéristiques univoques sauvegardées en mémoire, et
- si les deux contrôles donnent un résultat positif, éditer le code PIN sauvegardé en mémoire, combiné à la caractéristique univoque,
et où le code d'accès et/ou les caractéristiques univoques et/ou les codes PIN sont sauvegardés en mémoire sous forme codée.

2. Procédé selon la revendication 1, **caractérisé en ce que** le code d'accès sauvegardé en mémoire est sauvegardé en mémoire de façon durable, et le contrôle de l'admissibilité du code d'accès indiqué est effectué à l'aide d'une comparaison avec le code d'accès sauvegardé en mémoire de façon durable.

3. Procédé selon la revendication 1 ou 2, **caractérisé en ce que** le code d'accès est utilisé comme clé pour la sauvegarde en mémoire codée.

4. Procédé selon la revendication 3, **caractérisé en ce que** le code d'accès n'est sauvegardé en mémoire que brièvement et est effacé, après avoir effectué le codage.

5. Procédé selon l'une des revendications 1 à 4, **caractérisé en ce que** le codage, entre la caractéristique univoque d'un dispositif à accès sécurisé et le code PIN afférent, est effectué par un codage du code PIN, la caractéristique univoque formant la clé.

6. Procédé selon l'une des revendications 1 à 5, **caractérisé en ce que** le code d'accès et/ou les caractéristiques univoques et/ou les codes PIN sont sauvegardés en mémoire dans des zones de mémoires inaccessibles de l'extérieur.

7. Procédé selon l'une des revendications 1 à 6, **caractérisé en ce que** l'on utilise comme caractéristique univoque le numéro de série respectif du dispositif à accès sécurisé.

8. Procédé selon l'une des revendications 1 à 6, **caractérisé en ce que** l'on utilise comme caractéristique univoque une propriété physique caractéristique du dispositif à accès sécurisé.

9. Procédé selon l'une des revendications 1 à 8, **caractérisé en ce que** la caractéristique univoque spécifique est déterminée et indiquée automatiquement.

10. Procédé selon l'une des revendications 1 à 9, **caractérisé en ce que** l'édition du code PIN n'est mise à disposition que pendant une durée limitée.

11. Procédé selon l'une des revendications 1 à 10, **caractérisé en ce que** les dispositifs à accès sécurisé sont des cartes à puce et/ou des cartes à bande magnétique.

12. Procédé selon l'une des revendications 1 à 11, **caractérisé en ce qu'**il y a édition d'un faux code PIN, non sauvegardé en mémoire, si l'un des deux contrôles donne un résultat négatif.

13. Dispositif (20) servant à sauvegarder en mémoire et à retrouver une pluralité de codes PIN pour des dispositifs (10) à accès sécurisé, comprenant :
- un clavier (26), pour indiquer le code PIN et un code d'accès,
- un dispositif de réception d'une caractéristique univoque spécifique des dispositifs (10) à accès sécurisé,
- au moins une mémoire, pour sauvegarder en mémoire au moins brièvement le code d'accès, pour sauvegarder en mémoire le code PIN et pour sauvegarder en mémoire les caractéristiques univoques,
- un dispositif pour vérifier l'admissibilité d'un code d'accès indiqué et pour comparer une caractéristique univoque indiquée à des caractéristiques univoques sauvegardées en mémoire, et
- un visuel d'affichage (25), pour afficher un code PIN retrouvé, et où un dispositif est prévu, pour coder le code PIN et/ou les caractéristiques univoques et/ou le code d'accès.

14. Dispositif selon la revendication 13, **caractérisé en ce que** le dispositif (20) est un lecteur de carte de poche.

15. Dispositif selon la revendication 13, **caractérisé en ce que** des zones mémoires, inaccessibles de l'extérieur, sont prévues pour sauvegarder en mémoire le code PIN et/ou les caractéristiques univoques et/ou le code d'accès

16. Dispositif selon l'une des revendications 13 à 15, **caractérisé en ce que** le clavier (26) forme le dispositif de réception des caractéristiques univoques.

17. Dispositif selon l'une des revendications 13 à 15, **caractérisé en ce que** le dispositif de réception des caractéristiques univoques comprend un dispositif de détermination automatique des caractéristiques univoques des dispositifs à accès protégé.
